Europäisches Patentamt

European Patent Office

Office européen des brevets

(11) Publication number: **0 078 693**
**B1**

(12) **EUROPEAN PATENT SPECIFICATION**

(45) Date of publication of patent specification: **08.06.88**

(51) Int. Cl.⁴: **G 02 F 1/133**

(21) Application number: **82305790.6**

(22) Date of filing: **01.11.82**

(54) Parallel alignment of liquid crystals on conductive substrates.

(30) Priority: **04.11.81 US 317964**

(43) Date of publication of application:
**11.05.83 Bulletin 83/19**

(45) Publication of the grant of the patent:
**08.06.88 Bulletin 88/23**

(84) Designated Contracting States:
**DE FR GB IT SE**

(56) References cited:
**WO-A-79/01025**
**DE-A-2 931 293**
**FR-A-2 218 575**
**FR-A-2 308 675**
**US-A-4 153 529**

(73) Proprietor: **Hughes Aircraft Company**
**7200 Hughes Terrace P.O. Box 45066**
**Los Angeles California 90045-0066 (US)**

(72) Inventor: **Lackner, Anna M.**
**10379 Eastborne Avenue**
**Los Angeles California 90009 (US)**

(74) Representative: **Colgan, Stephen James et al**
**CARPMAELS & RANSFORD 43 Bloomsbury**
**Square**
**London WC1A 2RA. (GB)**

Courier Press, Leamington Spa, England.

## Description

This invention relates, generally, to the alignment of liquid crystals in electro-optical devices and more particularly to the parallel alignment of liquid crystals in direct current (dc) electro-optical devices.

It is desirable in the fabrication of electro-optical devices having liquid crystal therein to induce uniform molecular alignment of the liquid crystals for several reasons. For example, it is known that the temporal response of liquid crystals is dependent, inter alia, on the alignment of the liquid crystal material, and uniformity of liquid crystal alignment influences the contrast ratio of the electro-optical device by affecting the "field-off" appearance of the liquid crystal. This invention describes a method of inducing and maintaining parallel alignment of liquid crystals in dc electro-optical devices.

Parallel alignment in liquid crystal devices was first induced by rubbing (P. Chatelain, *Bulletin Society France Mineral*, Vol. 66, pp. 105 (1973); D. W. Berreman, *Physics Review Letters*, Vol. 28, pp. 1683 (1973) and U.S. Patent 3,834,792 issued to H. Sorkin in (1975). Rubbing, however, produces non-uniform striations that are readily visible with polarizers in projection displays and in systems used for optical data processing.

Improved techniques for inducing parallel alignment of liquid crystals that are costly and only applicable for alternating current (ac) applications include (1) vapor deposition of SiO at an angle (U.S. Patent 3,834,792, issued to J. L. Janning in 1974 and U.S. Patent 3,938,242, issued to A. Sussman in 1976), (2) micromachining of $SiO_2$ deposited onto a substrate by ion beam etching ("A New Method For Inducing Homogeneous Alignment of Nematic Liquid Crystals" by Michael J. Little et al, Liquid Crystals and Ordered Fluids, Vol. 3, pp. 499 (1978), and (3) vacuum depositing an inorganic film onto a nonconductive substrate using a vapor deposition angle of approximately 5° to the plane of the surfaces to be coated (U.S. Patent 3,885,860, issued to Howard Sorkin in 1975).

Attempts to ion beam etch conductive substrates, in order to induce stable parallel alignment of liquid crystals subsequently brought in contact therewith, have not been successful. The results of these attempts were erratic and unstable (Myer, G. D., "Alignment of Nematic Liquid Crystals by Surface Dipoles", presented at 7th International Liquide Crystal Conference, Bordeaux, France, July 1—5, 1978).

Thus there are no suitable methods, known to this inventor, for inducing parallel alignment of liquid crystals on conductive substrates intended for use as electrodes in dc electro-optical devices which yield stable uniformly parallel alignment of the liquid crystal materials.

In seeking to provide dc operable electro-optical devices comprising uniformly parallel aligned liquid crystals, it has been discovered that parallel alignment of liquid crystals on conductive substrates can be inexpensively and easily achieved by coating the conductive substrate with essentially transparent polyvinyl alcohol, and subsequently micromachining the coated substrate at a shallow angle to provide a multiplicity of substantially uniformly parallel grooves in the surface of the substrate coating. This process provides a conductive substrate which sympathetically aligns the molecules of liquid crystals, subsequently brought in contact therewith, and liquid crystal alignment by this process is reproducible and stable.

According to the present invention there is provided a method for inducing liquid crystals to assume and retain uniform parallel alignment on the surfaces of conductive substrates used as electrodes in electro-optical devices characterised by the steps of:

a) first providing an aqueous solution of polyvinyl alcohol containing from 1 to 10% polyvinyl alcohol;

b) applying a coating of said polyvinyl alcohol to the surface of said substrate from said solution, thereby forming a substrate coated with an amorphous polymeric material;

c) baking said coated substrate under dry nitrogen, thereby removing all traces of moisture from said coating; and

d) subsequently micromachining said coating to provide uniform grooves therein by bombarding said coating with ion beams at an etch angle not exceeding 30 degrees thereby providing a prepared surface which causes subsequently applied liquids crystals to align themselves parallel to the axis of said grooves and adhere to said polyvinyl alcohol coating.

In seeking to provide an improved method of inducing parallel alignment of liquid crystals on conductive substrates for use in dc electro-optical devices, it has been discovered that excellent parallel alignment of liquid crystals on conductive substrates such as indium-tin-oxide (ITO), zinc sulfide (ZnS), cadmium sulfide (CdS), indium oxide ($In_2O_3$), tin oxide (SnO), chromium (Cr), silver (Ag), gold (Au), and aluminum (Al) can be induced by first providing the surface of the conductive substrate with an essentially transparent (to light in the visual wavelength ranges) polyvinyl alcohol coating, and subsequently micromachining the coated surface to provide a multiplicity of microgrooves therein which sympathetically align liquid crystals (LC) brought in contact therewith.

The term "liquid crystals" as used herein means a liquid crystal compound, a mixture of liquid crystal compounds, a mixture of liquid crystal compounds containing conductive dopants, or a mixture of liquid crystal compounds in an appropriate solvent which itself is not a liquid crystal compound. Liquid crystal compounds derived from the phenylbenzoate esters are of primary interest in the fabrication of dynamic scattering mode (DSM) electro-optical devices. However, the process of this invention is not limited to the alignment of phenylbenzoate ester liquid crystal compounds. It may be employed to align other LC compounds such as the Schiff bases, azoxybenzenes, bephenyls, and phenylcyclohexanes.

The surface of a selected substrate is thoroughly cleaned of adsorbed contamiants with an organic detergent such as that sold by International Products Corp. of Trenton, New Jersey under the trade name "Micro" and an organic solvent, such as that sold by Transene Company, Inc. under the trade name "Transene 100", before the polymer coating is applied. Other suitable detergents and solvents may be used to remove absorbed contaminants from the substrate surfaces. Polyvinyl alcohol may be applied to the surface of the seleected substrate by conventional techniques for applying coatings from polymer-solvent solutions. Spin coating techniques, such as that described in "Characteristics of Resist Fibers Produced by Spinning" by Dietrich Meyerhofer, *Journal of Applied Physics,* Vol. 49(7), page 3993, July 1978, are particularly suitable inasmuch as smooth coatings of uniform thickness are obtained via the use of this method.

The best results have been obtained with 1 to 10% aqueous polyvinyl alcohol solutions, which are readily prepared from inexpensive, abundantly available materials purchased from chemical supply houses. When the polymer coating is applied from an aqueous solution, it is necessary to remove all traces of moisture from the surface coating. This is accomplished by baking the coated substrate at temperatures in excess of 100%C in a dry atmosphere. In addition, baking causes the polymers to harden and thereby become amenable to micromachining.

Contrary to commonly held beliefs, polyvinyl alcohol coatings may be reproducibly micromachined by ion beam etching at shallow etch angles. The specific etch conditions will vary with the choice of the substrate material. However, with polyvinyl alcohol (PVA) coatings, good alignment of liquid crystals was obtained when the polymer coating was bombarded with argon ion beams at a 20° etch angle from an apparatus operating from 5 seconds to as long as 3 mintures at 2,400 volts and 0.18 ampere maximum current to yield 0.12 milliampere/cm$^2$ current densities and the substrates were either ITO or ZnS. On the other hand, the same operating conditions resulted in a complete removal of the PVA coating from an ITO substrate when the etch time was five and one-half minutes.

While tests to optimize operating parameters such as sample distance from ion beam source, specific ion beam source, etch angle, and operating pressures have not been concluded, sample-to-source distances of 5.08 cm using argon ion beams at operating pressures of $1.33\times10^{-4}$ mbar have proven to be suitable. Etch angles ranging from 10° to 30° appear to be appropriate for inducement of parallel alignment. The key is to select operating parameters which yield substantially uniformly parallel grooves in the coating without destroying the coating.

Further, the grooves should not penetrate the coating to reach the substrate surface. For examples of such techniques, see "Introduction to Reactive Ion Beam Etching" by D. F. Downey et al, *Solid State Technology,* Vol. 24, No 2, page 124, (February 1981).

Specific applications of the process are shown in the following exampes.

Example 1

The electrodes used for alignment tests were 3.18 mm thick glass with indium-tin-oxide (ITO) coatings supplied by Optical Coating Laboratory of Santa Rosa, CA. (OCLI). They were cleaned with detergent and organic solvents to remove adsorbed contaminants. Each electrode was coated with polyvinyl alcohol (PVA) solution using a photoresist spinner at 2000 rpm for 60 seconds. A polymer solution (polyvinyl alcohol in water) available from American Liquid Crystal Chemical Corporation of Kent, Ohio under the tradename SA-72, was used in the supplied concentration in one instance and diluted with water up to 1:4 ratio in another instance. The same result can be obtained by using an aqueous solution of 1—5% polyvinyl alcohol, such as Elvanol grade 71—30 available from Du Pont Chemical Co. of Wilmington, Delaware or a similar material.

After the electrodes had been coated with the polymer, they were baked at 100°C for 16 hours under nitrogen atmosphere to eliminate any residual water from the substrate that might cause liquid crystal decomposition, thereby producing a dry, coated substrate surface.

The dried substrates were ion beam etched (IBE) at a shallow angle of 20° for 2—5 seconds in a Vecco Microetch apparatus which produces randomly distributed parallel grooves spaced 2 to 10 nm aparat. This ion beam sputtering system and its operation has been well described in the literature (see, e.g., M. J. Little et al *Liquid Crystals and Ordered Fluids,* Volume 3, page 497 (1978)).

A typical sandwich type cell was assembled with two ITO electrodes that were coated with PVA and IBE using a 6.35 μm Mylar spacer and Merck Chemical Co. N.P. 5 liquid crystal mixture. The quality of surface alignment was evaluated between crossed polarizers under the microscope at 125×magnification. The alignment was good, uniform, and dark colored over the entire aperture. As the cell was operated in the variable grating mode (VGM), it showed straight parallel domain lines uniformly over the whole surface area. Alignment stability, tested by operating the VGM cell with 15 volts dc signal for 64 hours, showed no change in alignment.

Example 2

The above described alignment technique with ion beam etched polymer was tested on zinc sulfide (ZnS) substrates. These ZnS electrodes were made by evaporating a 5 μm thickness ZnS layer on ITO substates. Due to the thickness and roughness of the ZnS layer, until now there were no successful ways of aligning these substrates by polishing and either rubbing or ion beam etching. However, polymer-coating the ZnS produced a smooth surface and enabled the use of ion beam etching alignment. The procedure for polymer coating and ion beam etching the PVA-coated ZnS was the same as for PVA-coated ITO. Two liquid crystal cells were fabricated with the ZnS photoconductor and ITO counter electrodes using Merck N.P.5 liquid crystal and 6.35 µm Mylar spacer. Both cells showed good uniform homogeneous alignment and uniform domain structure when dc voltage was applied to the cells.

The method of inducing parallel alignment of liquid crystals on conductive substrates discussed above is relatively inexpensive and yields stable reproducible results. This method is therefore useful in the fabrication of electro-optical cells for numerous light display systems and data processing systems.

## Claims

1. A method for inducing liquid crystals to assume and retain uniform parallel alignment of the surfaces of conductive substrates used as electrodes in electro-optical devices characterised by the steps of:

a) first providing an aqueous solution of polyvinyl alcohol containing from 1 to 10% polyvinyl alcohol;

b) applying a coating of said polyvinyl alcohol to the surface of said substrate from said solution, thereby forming a substrate coated with an amorphous polymeric material;

c) baking said coated substrate under dry nitrogen, thereby removing all traces of moisture from said coating; and

d) subsequently micromachining said coating to provide uniform grooves therein by bombarding said coating with ion beams at an etch angle not exceeding 30 degrees thereby providing a prepared suface which causes subsequently applied liquid crystals to align themselves parallel to the axis of said grooves and adhere to said polyvinyl alcohol coating.

2. The method of Claim 1 wherein the etch angle ranges from 10 to 30 degrees.

3. The method of aligning liquid crystals on the surface of conductive substrates in accordance with Claim 1 wherein said substrate is an electrode prepared from material selected from the group consisting of indium-tin-oxide, zinc sulfide, cadmium sulfide, indium oxide, tin oxide, chromium, silver, gold and aluminium and wherein said micromachined grooves penetrate into said surface coating only, thereby leaving a portion of said surface coating over the entire surface of said conductive substrate.

4. The method of Claim 3 wherein said substrate is indium-tin-oxide.

5. An electro-optical device prepared by the process of Claim 1.

6. An electro-optical device prepared by the process of Claim 3.

## Patentansprüche

1. Verfahren zur Beinflussung von Flüssigkristallen zur Annahme und Erhaltung gleichförmiger Parallel-Ausrichtung an den Oberflächen von leitenden Substraten, die als Elektroden in elektrooptischen Vorrichtungen verwendet werden, gekennzeichnet durch die Stufen:

a) man schafft zuerst eine wässrige Lösung von Polyvinylalkohol, die von 1 bis 10% Polyvinylalkohol enthält;

b) man bringt eine Beschichtung des Polyvinylalkohols auf der Oberfläche des Substrats aus der Lösung auf, wodurch man ein mit einem amorphen polymeren Material beschichtetes Substrat bildet;

c) man trocknet das beschichtete Substrat unter trocknem Stickstoff, wobei man alle Feuchtigkeitsspuren aus der Beschichtung entfernt; und

d) anschließend feinstbearbeitet man die Beschichtung zur Erzeugung gleichförmiger Rillen durch Beschießen der Beschichtung mit Ionenstrahlen in einem Ätzwinkel nicht über 30 Grad, wobei man eine präparierte Oberfläche schafft, die verursacht, daß anschließend aufgebrachte flüssige Kristalle sich selbst parallel zu der Achse der Rillen ausrichten und an der Polyvinylalkohol-Beschichtung haften.

2. Verfahren nach Anspruch 1, wobei der Ätzwinkel im Bereich von 10 bis 30 Grad liegt.

3. Verfahren zur Ausrichtung von Flüssigkristallen an der Oberfläche von leitenden Substraten gemäß Anspruch 1, wobei das Substrat eine Elektrode ist, die aus einem Material aus der Gruppe: Indium-Zinn-Oxid, Zinksulfid, Kadmiumsulfid, Indiumoxid, Zinnoxid, Chrom, Silber, Gold und Aluminium hergestellt ist und wobei die feinstbearbeiteten Rillen nur in die Oberflächenbeschichtung eindringen, und dadurch einen Teil der Oberflächenbeschichtung über der ganzen Oberfläche des leitenden Substrats zurücklassen.

4. Verfahren nach Anspruch 3, wobei das Substrat Indium-Zinn-Oxid ist.

5. Elektro-optische Vorrichtung, hergestellt nach dem Verfahren des Anspruchs 1.

6. Elektro-optische Vorrichtung, hergestellt nach dem Verfahren des Anspruchs 3.

## Revendications

1. Procédé pour amener des cristaux liquides à adopter et conserver un alignement parallèle uniforme sur les surfaces de substrats conducteurs utilisés comme électrodes dans des dispositifs électrooptiques, caractérisé en ce qu'il comprend les étapes consistant:

a) à préparer tout d'abord une solution aqueuse d'alcool polyvinylique renfermant 1 à 10% d'alcool polyvinylique;

b) à appliquer un revêtement dudit alcool polyvinylique à la surface dudit substrat à partir de ladite solution, en formant ainsi un substrat revêtu d'une matière polymérique amorphe;

c) à soumettre à une cuisson ledit substrat revêtu sous atmosphère d'azote anhydre, ce que permet ainsi d'éliminer dudit revêtement touts les traces d'humidité; et

d) à soumettre ensuite ledit revêtement à un micro-usinage pour y ménager des rainures uniformes en bombardant ledit revêtement avec des faisceaux ioniques à un angle d'attaque ne dépassant pas 30 degrés, ce qui permet ainsi d'obtenir une surface préparée qui contraint ensuite des cristaux liquides appliqués à s'aligner d'eux-mêmes parallèlement à l'axe desdites rainures et à adhérer audit revêtement d'alcool polyvinylique.

2. Procédé suivant la revendication 1, dans lequel l'angle d'attaque est compris dans l'intervalle de 10 à 30 degrés.

3. Procédé pour aligner des cristaux liquides sur la surface de substrats conducteurs suivant la revendication 1, dans lequel le substrat est une électrode préparée à partir d'une matière choisie dans le groupe comprenant l'oxyde d'indium-étain, le sulfure de zinc, le sulfure de cadmium, l'oxyde d'indium, l'oxyde d'étain, le chrome, l'argent, l'or et l'aluminium, et dans lequel les rainures soumises à un micro-usinage pénètrent seulement dans le revêtement superficiel, laissant ainsi une partie dudit revêtement superficiel sur la totalité de la surface dudit substrat conducteur.

4. Procédé suivant la revendication 3, dans lequel le substrat est l'oxyde d'indium-étain.

5. Dispositif électro-optique préparé par le procédé suivant la revendication 1.

6. Dispositif électro-optique préparé par le procédé suivant la revendication 3.